# EUROPEAN PATENT SPECIFICATION

(11) **EP 4 466 297 B1**
(45) Date of publication and mention of the grant of the patent: **03.06.2026**
(21) Application number: 23704234.6
(22) Date of filing: 17.01.2023
(51) Int. Cl.: C08G 18/20, C08G 18/24, C08G 18/30, C08G 18/32, C08G 18/36, C08G 18/76, C08J 9/00, C08J 9/08, C08L 75/06, C08G 101/00

(54) **LIQUID BASE PRODUCT, LIQUID FORMULATED PRODUCT, LIQUID FINAL PRODUCT, BIODEGRADABLE SOLID PRODUCT AND BIODEGRADABLE PRODUCT FABRICATION PROCESS**
FLÜSSIGES BASISPRODUKT, FLÜSSIGES FORMULIERTES PRODUKT, FLÜSSIGES ENDPRODUKT, BIOLOGISCH ABBAUBARES FESTES PRODUKT UND HERSTELLUNGSVERFAHREN FÜR BIOLOGISCH ABBAUBARES PRODUKT
PRODUIT DE BASE LIQUIDE, PRODUIT FORMULÉ LIQUIDE, PRODUIT FINAL LIQUIDE, PRODUIT SOLIDE BIODÉGRADABLE ET PROCÉDÉ DE FABRICATION DE PRODUIT BIODÉGRADABLE

(30) Priority: 18.01.2022 BR 102022000974; 12.01.2023 BR 102023000639
(43) Date of publication of application: 27.11.2024
(73) Proprietor: ISOCARE SOLUÇÕES AMBIENTAIS S/A, 88301-303 Itajaí SC (BR); HDGL LLC., Miami, FL 33131 (US)
(72) Inventor: COVALSKI PORSCH, Carolina, 88015-530 Florianópolis - SC (BR); CUEVAS PERLANZA, Laurêncio, 88304-100 Itajaí - SC (BR)
(74) Representative: Michalski Hüttermann & Partner Patentanwälte mbB
(86) International application number: PCT/BR2023/050015
(87) International publication number: WO 2023/137535

(56) References cited:
- EP-B1- 0 672 698
- WO-A2-01/70842
- US-B1- 6 444 777

## Description

This invention refers to a semi-rigid and rigid biodegradable product and its possible combinations, for packaging, thermal insulation, civil construction and various other applications, and a process of obtaining such product. More particularly, this invention refers to a biodegradable product, and a fabrication process for such product, which constitutes a sustainable alternative to products manufactured with EPS (expanded polystyrene) and PU (fossil polyurethane), with the product addressed by this invention being fully recyclable, nontoxic and biodegradable.

This invention refers to a liquid product called the BASE MIXTURE, being a liquid formed from a mixture of one of the vegetable oils, and/or blond glycerin, and/or animal fat ingredients with nitrilotriethanol.

This invention refers to a liquid product called the FORMULATED MIXTURE, a liquid that forms from the mixture of one of the vegetable oils, and/or blond glycerin, and/or animal fat and nitrilotriethanol ingredients, mixed also with organic surfactants, the catalysts, reagents, and/or water.

This invention refers to a liquid product called the FINAL MIXTURE, a liquid that forms from the mixture of one of the vegetable oils, and/or blond glycerin, and/or animal fat ingredients and nitrilotriethanol, mixed also with organic surfactants, the catalysts, reagent s, water, and/or isocyanates.

### Description of State of the Art

Currently, for use in packaging, thermal insulation and civil construction, the main products used are EPS (commonly known as expanded polystyrene or *isopor*) and PU (polyurethane foam). EPS is widely used in the manufacture of packaging for household appliances, due to its properties of low apparent density and low cost; it is also widely used in civil construction and as thermal insulation. PU is commonly used in vehicle seats, mattresses, pillows and thermal insulation.

These products are not biodegradable and are thus harmful to the environment when discarded. The increasing use of these products has no feasible practical solution for the safe and non-polluting disposal thereof, based on the knowledge available at the state of the art.

In this Specification, the term "biodegradable product" must be understood as being a product, part, article, accessory, utensil, device, packaging, or artifact, among others, whose characteristics allow it to degrade in nature. For a product to be considered biodegradable, a commonly applied rule is that there must be a physical change in the product moving towards decomposition within six months of product disposal. As shown below, the product addressed by this invention began to degrade during the first 15 (fifteen) days of exposure to the sun; from ninety days onwards, it is already in clear biodegradation.

Not biodegradable, EPS and PU are hard to recycle. In developed countries, recycling these products reaches only 40% of discarded materials. In Brazil and other less developed countries, the recycling of these products reaches less than 10% of discarded materials.

Furthermore, EPS is rated as a carcinogenic product that is found in large quantities in oceans around the world. Fragments of EPS discarded from household appliance packaging are found in small, medium or large quantities in waterbodies where they improperly end up, or are swept into them by rain runoff, whence they are then carried into rivers and finally oceans.

These aquatic environments are adversely affected by steady inflows of EPS. As these fragments collide with each other and other plastics floating in the oceans, EPS is broken down into millions of fragments, building up into massive volumes over the years and forming islands that are visible from the International Space Station.

These microplastics generated by EPS may absorb and concentrate toxic chemical compounds such as pesticides and heavy metals (such as mercury and lead), found mainly in rivers, lakes and oceans, making it a potential contaminant, particularly if consumed by aquatic wildlife. This makes its presence in marine environments dangerous, as fish, turtles, whales, dolphins and other marine animals confuse these microplastics with marine organisms and feed on them, poisoning them and endangering entire food chains.

In view of the environmental and health problems caused by EPS products, several major international retailers that purchase home appliances from multinational manufacturers are already stating that they will not accept products with EPS packaging from 2022 onwards. Leroy Merlin, Walmart and others have already sent official written notifications to household appliance manufacturers.

WO 01/70842 A2 relates PU foams and the method for preparing them. Disclosed therein is inter alia a roofing foam which is formed from different mixtures which comprise inter alia castor oil and triethanolamine. Furthermore, TEOA is used as a crosslinking agent and/or a chain extender, to provide mechanical properties to the final PU product, without altering the chemical structure of the plant base that is used.

EP 0 672 698 B1 describes PU foams based on fatty acids, which are formed, for example, by using mixtures which comprise a first component comprising oleic acid and rapeseed oil as vegetable oil and a second component comprising an amine (RA, RH, RI).

US 6,444,777 B1 describes preferably cellular polyurethane elastomers and several compositions comprising, for instance, ricinoleic acid and castor oil as first components and an amine as second component.

However, no solutions are known at the state of the art that could replace EPS and PU products in terms of trade, application, practicality, and possibilities of appropriate disposal. No products are known that could replace the physical characteristics of EPS and PU while at the same time allowing environmentally friendly disposal through natural biodegradation.

### Purposes of the Invention

In response to the problems described at the state of the art, this invention strives to provide a nontoxic, recyclable and biodegradable product for packaging, thermal insulation, civil construction and other purposes, as a sustainable alternative to EPS and PU. Due to its technical characteristics, the product addressed by this invention may also be used as a substitute for cardboard, products or packaging made of cellulose fiber. Furthermore, this invention is intended to provide a product that may be used as fertilizer on fertile soil after disposal.

Another goal of this invention is to provide a product with mechanical strength characteristics superior to EPS and PU, together with low density, designed to fully replace both EPS and PU in the manufacture of packaging and thermal insulation.

Yet another purpose of this invention is to enable the use of natural components from renewable sources that do not compete directly with the food chain, such as "frying oil", which is the mixture of vegetable oils and animal fats collected from restaurants, snack bars, condominiums, and others, resulting in the reuse of products that would otherwise be discarded, thus avoiding contamination of wellsprings by discarded cooking oil.

Additionally, this invention is intended to avoid harming animals when ingested, in complete contrast to EPS and fossil PU, which do not break down in the digestive systems of animals when ingested, poisoning and killing off species.

Another purpose of this invention is to reduce carbon emissions into the atmosphere, using components from renewable sources to replace products and their applications that use oil-based sources as a basis for their fabrication.

Another purpose of this invention is to provide liquid or paste products for the fabrication of biodegradable products, thus simplifying and enhancing production chain efficiency.

These and further purposes are met with methods and means according to the independent claims of the present invention. The dependent claims are related to specific embodiments.

### Brief Description of the Invention

The invention is defined by the features of the appended independent claims. Preferred embodiments are defined by the features of the dependent claims.

In a first aspect the invention refers to a fabrication process for forming a liquid base product for forming a biodegradable product, characterized by comprising:
heating a first base mixture component to a temperature between 50°C and 70°C, wherein the first base mixture component is selected from at least one from the group consisting of: vegetable oil, blond glycerin, and animal fat;
adding a second base mixture component to the first base mixture component, wherein the second base mixture component is selected from at least one from the group consisting of: nitrilotriethanol, pentaerythritol, and trimethylol propane;
heating the combination of the first base mixture component and second base mixture component to a temperature between 90°C and 100°C, or to a temperature above the melting point of the second base mixture component if the second base mixture component has a melting point above 100°C; and
stirring the first base mixture component and second base mixture component for a period ranging between 60 minutes and 120 minutes at the temperature of the previous step to obtain a liquid base product with a hydroxyl value between 200 and 300,
wherein the liquid base product comprises between 63% and 90% of the first base mixture component, and between 10% and 37% of the second base mixture component, considering the total weight of the liquid base product.

In another aspect, the invention refers to a liquid base product for forming a biodegradable product, characterized by comprising a first base mixture component mixed with a second base mixture component, wherein
the first base mixture component is selected from at least one from the group consisting of: vegetable oil, blond glycerin, and animal fat; and
the second base mixture component is selected from at least one from the group consisting of: nitrilotriethanol, pentaerythritol, and trimethylol propane,
wherein the liquid base product comprises between 63% and 90% of the first base mixture component, and between 10% and 37% of the second base mixture component, considering the total weight of the liquid base product,
wherein the hydroxyl value of the liquid base product is between 200 and 300.

In another aspect, the invention refers to a liquid formulated product for forming a biodegradable product, characterized by comprising the liquid base product as defined above, mixed with an expansion agent and at least one from the group consisting of: organic surfactants, the catalysts, and reagents.

In another aspect, the invention refers to liquid final product for forming a biodegradable product, characterized by comprising a liquid formulated product, as defined above, mixed with an isocyanate, wherein the liquid final product comprises between 33.33% and 55.55% of the liquid formulated product and between 44.44% and 66.66% of isocyanate.

In another aspect, the invention refers to a biodegradable solid product, characterized by comprising the liquid final product, as defined above, polymerized in a solid state.

### Brief Description of the Drawings

This invention will then be described in greater detail, based on an example of embodiment shown in the drawings. The Figures show:
Figure 1 - a schematic diagram of one embodiment of the process of obtaining the biodegradable product ;
Figure 2 - a graph depicting an example of one embodiment of the biodegradable product; and
Figure 3 - a graph depicting an example of one embodiment of the biodegradable product.

### Detailed Description of the Drawings

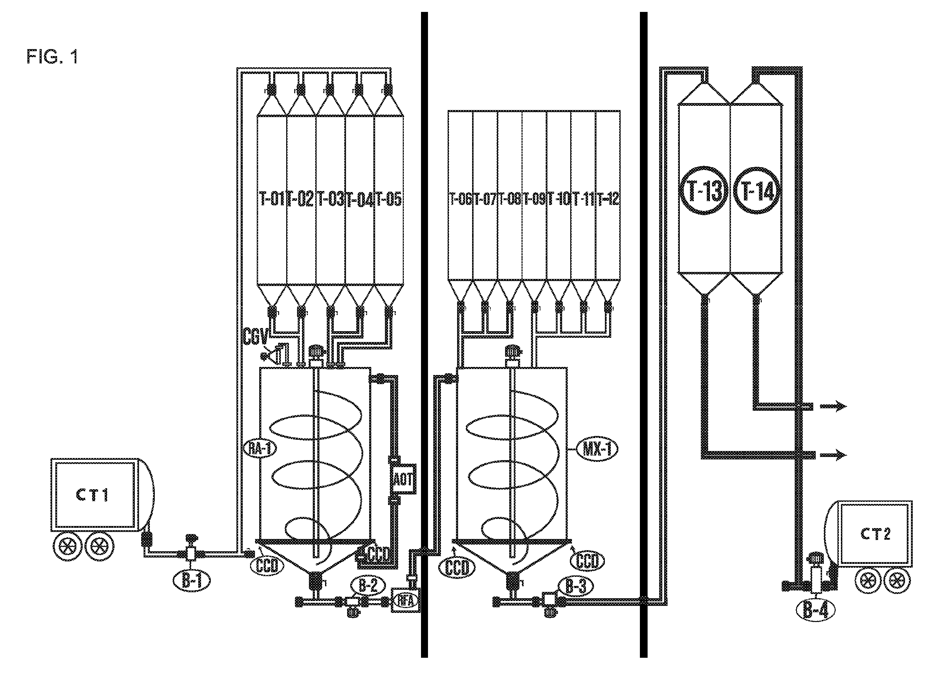

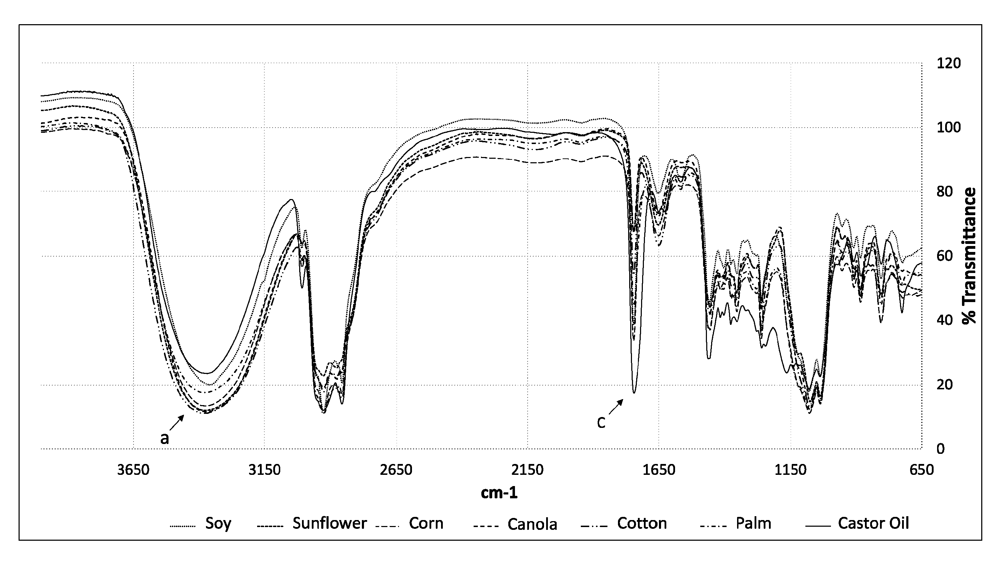

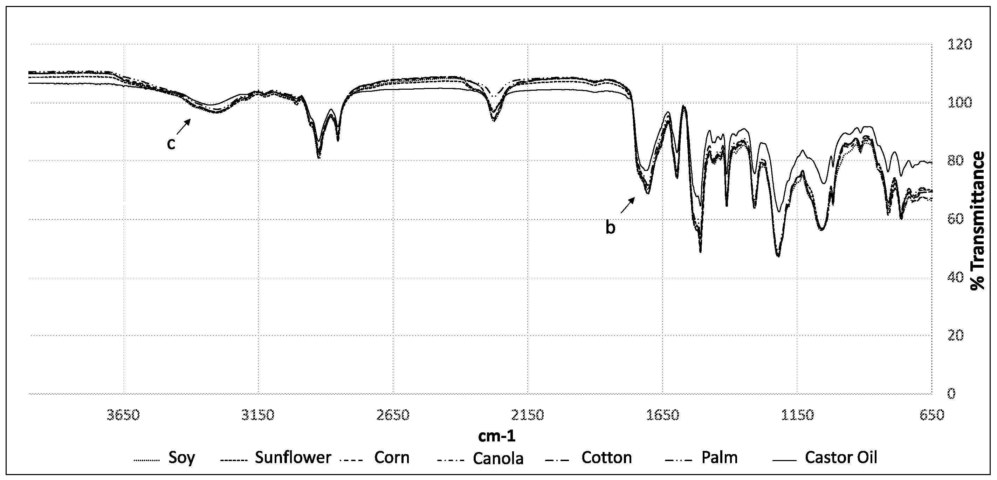

Figure 1 illustrates a schematic diagram of the fabrication process of the biodegradable product through one embodiment of the present disclosure. According to the embodiment shown in Figure 1, the process is divided into three phases: Phase 1, where a step of generating a base mixture is performed; Phase 2, where a step of generating a formulated mixture is carried out; and Phase 3, where a step of generating a final mixture is performed.

The step generating the final mixture occurs in the injector, which handles the dosage of the formulated mixture with the isocyanate, MDI, as a mass mixture, and injects the final mixture to perform a step of generating a solid final product, which is a biodegradable product, in one of the two alternatives: semi-rigid foam or rigid foam.

The "base mixture" term will also be used for the base product or liquid base product, and may be understood as a product resulting from Phase 1. The base product may be used, and/or marketed individually to subsequently generate the formulated mixture or may be used for other suitable purposes not previously identified in this document.

The "formulated mixture" term will also be used for the formulated product or the liquid formulated product and may be understood as a product resulting from Phase 2. The formulated product may be used, and/or marketed individually in order to subsequently generate the final mixture or mixture or may be used for other suitable purposes not previously identified in this document.

The "final mixture" term will also be used for the final product or the liquid final product and may be understood as a product resulting from Phase 3.

The "generate" term must be understood in the context of the present disclosure as conceptualizing, producing or obtaining something. It should thus be construed widely and not limited to a narrow understanding of its meaning.

The "phase" term should be understood similarly to the "step" term, used in the context of the present disclosure as a step that may comprise one or more steps or sub-steps.

The base mixture or base product is a liquid product resulting from the mixture comprised of two products for the production of the liquid base. This base mixture is formed by the mixture of vegetable oil, and/or blond glycerin, and/or animal fat (first base mixture component), with nitrilotriethanol (second base mixture component). Alternatively to nitrilotriethanol, other amines, glycols or polyglycols may be used, as well as organic acids, provided that they comply with the hydroxyl value mentioned below. It is important to highlight that the nitrilotriethanol may have a range of 70% to 100% purity, and may contain impurities such as water, nitrilodiethanol or nitrilomonoethanol. In an embodiment, possible preferred substitutes for nitrilotriethanol are pentaerythritol and trimethyl propane, being examples of polyglycols that perform the same function in the formulation.

For forming the base mixture that may constitute the rigid or semi-rigid biodegradable solid product, described herein, it is necessary to reach a hydroxyl value between 200 and 300, preferably between 210 and 250 and more preferably between 215 and 230. In a preferred embodiment, the hydroxyl value is preferably 215, 216, 217, 218, 219, 220, 221, 222, 223, 224, 225, 226, 227, 228, 229 or 230, or any interval between the indicated values.

The hydroxyl value mentioned in the preceding paragraph is a determining factor for obtaining the characteristics of the biodegradable solid final product. All vegetable oils, and/or blond glycerin, and/or animal fats have different hydroxyl values, ranging from approximately 0.1 to 163. Regardless of the hydroxyl content of the vegetable oil, and/or blond glycerin, and/or animal fat, the nitrilotriethanol or its substitutes should be added until the mixture reaches the hydroxyl value within the parameters already mentioned, or more preferably between 215 and 230.

Nitrilotriethanol has the function of balancing and raising the hydroxyl value. Thus, the higher its proportion in the base mixture, the higher the hydroxyl value of the resulting base mixture. Similarly, the lower the hydroxyl value of the basic component, namely vegetable oil, and/or blond glycerin, and/or animal fat, the more nitrilotriethanol should be added to bring the hydroxyl value up to the desired parameter.

Consequently, the mixture of nitrilotriethanol with vegetable oils, and/or blond glycerin, and/or animal fats provides a technical effect of lengthening the molecular chain of the oils, or extending the length of the hydroxyl molecular chain whereby the desired indexes are reached, such as between 215 and 230. This extension ensures the biodegradability of the material/product.

The formulated mixture or formulated product is a liquid product resulting from the embodiment of the liquid base mixture described above with the water, organic surfactant, catalyst, and reagent components for the formation of the liquid formulated product that will form the solid product, when mixed with an isocyanate catalyst, as already mentioned above, being one of the possible products resulting from this invention.

In an embodiment, the biodegradable final product comprises the following raw materials: vegetable oil, and/or blond glycerin, and/or animal fat; nitrilotriethanol, and/or pentaerythritol, and/or trimethyl propane; water; an organic surfactant, and/or a catalyst, and/or a reagent; and isocyanate.

In an embodiment, the biodegradable final product comprises: between 15.80% and 41.49% of vegetable oil, and/or blond glycerin, and/or animal fat; between 2.53% and 17.05% of nitrilotriethanol; between 3.33% and 8.33% of water; between 0.833% and 2.55% of organic surfactants, and/or between 0.009% and 0.1333% of catalysts, and/or between 1.066% and 2.45% of reagents; and 44.44% to 66.66% of isocyanate.

In an embodiment, the amount of vegetable oil, and/or blond glycerin, and/or animal fat is preferably 15.80%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41% or 41.49%, or any interval between the indicated values.

In an embodiment, the amount of nitrilotriethanol is preferably 2.53%, 3%, 4%, 5%, 6%, 7%, 8%, 9%, 10%, 11%, 12%, 13%, 14%, 15%, 16%, 17% or 17.05%, or any interval between the indicated values.

In an embodiment, the amount of isocyanate is preferably 44.44%, 45%, 46%, 47%, 48%, 49%, 50%, 51%, 52%, 53%, 54%, 55%, 56%, 57%, 58%, 59%, 60%, 61%, 62%, 63%, 64%, 65%, 66% or 66.66%, or any interval between the indicated values.

A liquid mixture reaction polymerizes a liquid final mixture of the product through an exothermic reaction, forming two types of solids: semi-rigid foam for use in packaging or as thermal insulation, for example; and rigid foam for use in civil construction, for example. Product degradation occurs in up to six months, with product density between 10 kg/m³ and 900 kg/m³.

The possible scope of ranges below the biodegradable final product depends on the BASE MIXTURE to be produced, which depends on the type of oil used and the amine used, always compliant with the hydroxyl value rule described above.

The range scope for an embodiment of final product formulations is presented below.

### RANGE SCOPE FOR FINAL PRODUCT FORMULATIONS:

The range scope presented below is possible, depending on the FINAL MIXTURE to be produced and the desired hardness and mechanical strength.

### FINAL MIXTURE WITH MDI:

FORMULATED MIXTURE - 33.33% to 55.55%; and
MDI - 44.44% to 66.66%.

One embodiment of the formulated mixture encompassed in the final mixture is described below. The following range scope is possible, depending on the FORMULATED MIXTURE to be produced.

### FORMULATED MIXTURE for rigid and semi-rigid:

Base mixture - 76% to 83%; and
Dibutyltin dilaurate - 0.006% to 0.125%; and
Nitrilotriethanol - 0.5% to 1.4%; and
Diaza - 0.003% to 0.00833%; and
Diethylene glycol - 0.566% to 1.05%; and
Silicone - 0.83% to 2.55%; and
Water - 3.33% to 8.33%.

An embodiment of the base mixture included in the formulated mixture is presented below. The following range scope is possible, depending on the BASE MIXTURE for the rigid and semi-rigid product to be produced:
Oils - 63% to 90%; and
Nitrilotriethanol - 10% to 37%.

In an embodiment, the amount of formulated mixture in the final mixture is preferably 33.33%,34%, 35%, 36%, 37%, 38%, 39%, 40%, 41%, 42%, 43%, 44%, 45%, 46%, 47%, 48%, 49%, 50%, 51%, 52%, 53%, 54%, 55% or 55.55%, or any interval between the indicated values.

In an embodiment, the amount of base mixture in the formulated mixture is preferably 76%, 77%, 78%, 79%, 80%, 81%, 82%, 83%, or any interval between the indicated values.

The higher the amount of isocyanate, MDI, in the final mixture, the greater the rigidity of the biodegradable solid product. Thus, a less rigid biodegradable solid product requires a smaller proportion of isocyanate in the final mixture.

As shown in Figure 1, in Phase 1 of the diagram the base mixture components that give rise to the base mixture are received in one or more T01, T02, T03, T04, T05 storage tanks. In this case, the step of receiving the base mixture components is performed in the T01, T02, T03, T04, T05 storage tanks. The base mixture components may be supplied through a CT1 tanker truck by means of a B-1 pump, for example.

Among the base mixture components, at least one component is comprised of at least one type of oil, and/or blond glycerin, and/or animal fat. The vegetable oils used in this embodiment comprise any one of the above-mentioned oils, in a non-exhaustive manner: frying oil, cooking oil, cotton oil, palm oil, soybean oil, corn oil, canola oil, sunflower oil, rapeseed oil or castor oil, with all these mentioned oils being unprocessed raw oils used in their natural state. Furthermore, it is possible to use a mixture of different vegetable oils and animal fat for the formulation of the base mixture components. Alternatively, a mixture of vegetable oils and blond glycerin may be used as the base mixture components.

Any of the oils mentioned above, in a mixture with nitrilotriethanol, or a substitute as described, for the formation of the base mixture, must reach the above-mentioned hydroxyl values as required for this invention. Examples of the amount of oils are presented below.

Frying oil and cooking oil may be used, being oils that have run through a recycling process. These oils may contain approximately 30% of animal fat which is exuded by various types of meats when frying.

Additionally or alternatively to the above-mentioned oils, unprocessed beef, pork or poultry fats may be used, in their natural state. Animal fat may be used in the process in ways similar to the use of vegetable oils, or in addition to vegetable oils, enhancing the desired quantity of this component. The technical effects obtained through the use of vegetable oils and/or animal fat is the same, whether mixed or individually.

In this embodiment, , there is no need to use esterification processes for the base mixture components that employ potassium hydroxide or sulfuric acid, usually washing with diluted caustic soda that is discharged into the environment after use, drying through heat exchanges with steam, additives containing heavy metals, or chemical homogenization processes. There is also no need to extract glycerin from the oils or animal fats.

Alternatively, use of the above-mentioned vegetable oils or animal fats may be replaced by blond glycerin, which contains hydroxyls, and for its ability to reach the desired hydroxyl values after the addition of nitrilotriethanol.

As they do not run through the degumming, refining, washing, deodorization and bleaching processes, the above-mentioned base mixture components are rated as toxic for human consumption and thus do not compete directly in the market as products intended for human consumption.

Among the base mixture components, in addition to vegetable oil, and/or blond glycerin, and/or animal fat, another component consists of nitrilotriethanol. Nitrilotriethanol is an organic chemical compound presenting in a viscous liquid state that is fully soluble in water and miscible with most oxygenated organic solvents. It is used to interact with organic surfactants and balance the stoichiometry of the vegetable oil base mixture component, and/or blond glycerin, and/or animal fat, increasing the hydroxyl value (OH) to reach the desired parameter.

Thus, the Phase 1 storage tanks T01, T02, T03, T04, and T05 are the storage tanks for oil, and/or blond glycerin, and/or fat for T01, T02, T03, and T04, while T05 is the storage tank for nitrilotriethanol or its substitutes as already listed.

In this embodiment, vegetable oils, and/or blond glycerin, and/or animal fat are transferred from the oil and/or fat storage tanks T01, T02, T03, T04 to an RA1 reactor. These components are transferred to the reactor through pipes, such as pipes suitable for the type of material to be transferred. Other forms of transfer may also be used without altering the effect obtained. Thus, a step is performed of introducing vegetable oils, and/or blond glycerin, and/or animal fat into the RA1 reactor.

The RA1 reactor is a recipient or tank that comprises an internal region, at least one inlet and at least one outlet. The RA1 reactor is basically a recipient designed to produce the base mixture, with chemical reactions, mass transfers, and/or heat transfers inside it. The components flow in through at least one inlet and flow out through at least one outlet after the reaction. Furthermore, the RA1 reactor allows its contents to be heated by means of a coil using thermal oil, externally and without coming into contact with its contents. The RA1 reactor may be considered as the first recipient in the process described herein.

The RA1 reactor comprises a mechanical stirrer configured to be driven by an MA1 motor. The mechanical stirrer is configured to stir the base mixture in the RA1 reactor through the MA1 motor drive. The MA1 motor, which may be of different types, such as an electric MA1 motor, has a frequency changer that varies the rotation, according to the vegetable oils, and/or blond glycerin, and/or animal fat used. Consequently, when driven the MA1 motor is switched on, it moves the mechanical stirred, which in turn stirs up the components in the reactor. The more viscous the vegetable oil or animal fat, the higher the MA1 motor speed should be.

The RA1 reactor also comprises an AOT heater that heats the base mixture in the RA1 reactor. The AOT heater may be any type of equipment able to heat the mixture in the RA1 reactor. An example of an AOT heater used is a magnetic field electric AOT HEATER that uses thermal oil in a closed circuit, with the thermal oil pumped through the heater that raises the temperature of the thermal oil up to between 90°C and 100°C. At this temperature, the thermal oil runs through the inner part of the coiled pipe that surrounds the entire cylindrical body of the RA1 reactor, transferring heat to the base mixture in the reactor and returning the thermal oil to the AOT heater for the next cycle.

The RA1 reactor is installed on a scale with CCD load cells. The CCD scale allows the components to be dosed as they are introduced into the RA1 reactor. Consequently, a step is performed that doses the vegetable oils, and/or blond glycerin, and/or animal fat fed into the RA1 reactor through a CCD scale.

The step is thus performed of introducing vegetable oils, and/or blond glycerin, and/or animal fat into the RA1 reactor from the oil or fat storage tanks T01, T02, T03, T04 through the pipes, and the step of dosing the amount of vegetable oils, and/or blond glycerin, and/or animal fat is handled through the CCD scale. In the illustrated embodiment, the step of dosing the amount of vegetable oils, and/or blond glycerin, and/or animal fat occurs during the step of introducing vegetable oils, and/or blond glycerin, and/or animal fat into the RA1 reactor through the CCD scale. Alternatively, dosage may occur before transferring the vegetable oils, and/or blond glycerin, and/or animal fat into the RA1 reactor, using dosing equipment in the oil or fat tanks T01, T02, T03, T04, or between the oil or fat tanks T01, T02, T03, T04 and the RA1 reactor.

The amount of vegetable oil, and/or blond glycerin, and/or animal fat dosed and introduced into the base mixture in the RA1 reactor is between 15.80% and 41.49% of the liquid final mixture . In a practical example, if the amount of the final mixture to be injected or applied is 100 grams, quantities between 15.80 grams and 41.49 grams of vegetable oils, and/or blond glycerin, and/or animal fat will be used.

After the steps of introducing and dosing vegetable oils, and/or blond glycerin, and/or animal fat into the RA1 reactor, the heater is activated and heats up the components in the RA1 reactor. The step of heating the vegetable oils, and/or blond glycerin, and/or animal fat is thus performed in the RA1 reactor. Inside the RA1 reactor, these components are heated by the AOT heater until they reach a mixture temperature. The mixture temperature is a temperature between 50°C and 70°C, or preferably a temperature of 60°C.

After the components in the RA1 reactor reach the mixture temperature, nitrilotriethanol or its above-mentioned possible substitutes is dosed and introduced into the RA1 reactor. The dosage and transfer of nitrilotriethanol, which is drawn from the T05 nitrilotriethanol storage tank to the RA1 reactor is similar to that already described for vegetable oils, and/or blond glycerin, and/or fat. After the step of heating the vegetable oils, and/or blond glycerin, and/or animal fat in the RA1 reactor to the mixture temperature, the steps are then performed of dosing the nitrilotriethanol and introducing the nitrilotriethanol into the RA1 reactor.

During the step of generating the base mixture, the vegetable oil, and/or blond glycerin, and/or animal fat should be heated, after the addition of nitrilotriethanol, until the mixture is homogenized, whereby the mixture temperature is temperature between 90°C and 100°C. If the nitrilotriethanol substitute has a melting point above 100°C, this temperature must be increased to exceed the melting point of the chosen substitute component. If the melting point of the selected substitute for the nitrilotriethanol component has a melting point above the flash point of the oil, the glycerin, or the fat, an antioxidant component should be injected into this reaction, such as nitrogen, for example.

The amount of nitrilotriethanol dosed and introduced into the RA1 reactor for the base mixture is between 2.53% and 17.05% of the liquid final mixture. In a practical example, if the amount of the final mixture to be injected or applied is 100 grams, quantities between 2.53 grams and 17.05 grams of nitrilotriethanol will be used.

With the selected base mixture components duly introduced into the RA1 reactor in their respective quantities, the step of stirring the base mixture components is performed. This step is carried out by the movement of the mechanical stirrer, driven by the MA1 motor. The step of stirring the base mixture components in the RA1 reactor has the duration of a first stirring time. The first stirring time is comprised of a period between 60 minutes and 120 minutes.

lf the temperature and stirring of the components in the RA1 reactor generates any gas emissions, the RA1 reactor is configured to liquefy such gas emissions, in other words, to perform the step of liquefying gases emitted by the mixture during the stirring step. To do so, the RA1 reactor includes a CGV gas condenser. The CGV gas condenser is the element of the RA1 reactor that liquefies any gases resulting from the temperature and stirring of the base mixture in the RA1 reactor. Thus, the process mitigates heat loss and prevents gases from escaping into the environment.

The CGV gas condenser comprises honeycomb piping, a fan and an electric motor. To perform the step of liquefying gas emissions, the emitted gases run through the honeycomb piping, which is cooled by the fan powered by the electric motor. The cooling generated by the fan causes the gas emissions to condense, returning to the RA1 reactor in a liquid state.

At the end of the steps of introducing, dosing and heating the vegetable oils, and/or blond glycerin, and/or animal fat, introducing and dosing the nitrilotriethanol or its substitutes as listed above, and stirring the base mixture components in the RA1 reactor, the base mixture is obtained.

After the base mixture is obtained, the step of removing the base mixture from the RA1 reactor is performed. The base mixture is removed from the RA1 reactor through a pipe removing the base mixture by means of a B2 pump. The B2 pump is an item of equipment in the system shown in the diagram of this embodiment, which is configured to remove the base mixture of the RA1 reactor and is not limited to any specific type of pump.

Before moving on to Phase 2, the step of cooling the base mixture occurs in this embodiment. Any cooling system may be used, running on water, thermal oil, or any other heat exchange system. For cooling the base mixture, the schematic diagram of the system shown in Figure 1 comprises an RFA air cooler. The RFA air cooler is any cooler that uses air to exchange heat between two media. In this case, the RFA air cooler is a cooler that can cool the base mixture. Consequently, the B2 pump removes the base mixture from the RA1 reactor and sends base mixture to the RFA air cooler.

The RFA air cooler comprises honeycomb piping, a fan and an electric motor. The RFA air cooler uses ambient air for heat exchanges. To perform the step of cooling the base mixture in the RFA air cooler, the base mixture runs through the honeycomb piping, which is cooled by exchanging heat with the ambient air through the fan powered by the electric motor.

The step of cooling the base mixture occurs until the base mixture reaches a cooling temperature. The cooling temperature is a temperature that is between approximately 20°C and 40°C, meaning room temperature. This process is carried out to ensure that other components in the formulated mixture do not evaporate when added. Upon reaching the cooling temperature, all the obtained base mixture is sent to Phase 2 of this process, for the production of the formulated mixture.

As may be noted in Figure 1, the second phase in the diagram of this embodiment, which will produce the formulated mixture, comprises the T06, T07, T08, T09, T10, T11, and T12 storage tanks. The Phase 2 storage tanks are designed to store the formulated mixture components.

The formulated mixture components include at least one from the group of: the organic surfactants, the catalysts, and/or the reagents.

In an embodiment, the formulated mixture comprises a catalyst selected from at least one of: dibutyltin dilaurate, dibutyl cobalt dilaurate, cobalt octoate, diazabicyclo-octane, and/or dimethylcyclo-hexylamine.

In an embodiment, the formulated mixture comprises an organic surfactant selected from at least one of: silicone and/or water soluble silicone.

In an embodiment, the formulated mixture comprises a reagent selected from at least one of: diethylene glycol, monoethylene glycol, propylene glycol, and/or nitrilotriethanol.

Such components are the main possible substitutes for the formulation of the base mixture and the formulated mixture, but may be replaced by the above-mentioned components.

In this embodiment, each T06, T07, T08, T09, T10, T11, and T12 storage tank stores at least one organic surfactant, such as: a T06 dibutyltin dilaurate tank, a T07 diazabicyclo-octane tank, a T08 diethylene glycol tank, and a T09 silicone or water-soluble silicone tank.

The reactive and organic surfactants used in Phase 2 basically facilitate and improve the efficiency of the reaction of the base mixture with the formulated mixture components. The dibutyltin dilaurate speeds up the reaction. The reactive and organic surfactants are formulated mixture components that react massively by increasing the volume and rigidity of the solid final product when mixed with the isocyanate. The diazabicyclo-octane is an activator that speeds up the reaction. It starts the process and also completes the reaction with the stabilization of the formula. The diethylene glycol helps the reaction between the oil and the silicone. The silicone lattices the cell openings.

Water is also included among the formulated mixture components, The water used as a formulated mixture component is stored in the T10 water storage tank.

The water component is an expansion agent and must be introduced gradually into the formulated mixture throughout the stirring period. Gradually introducing water during the base mixture stirring period with organic surfactants, catalysts, and/or reagents means adding multiple doses or percentages of this component to the mixture, continuously or not, over the period of time when stirring takes place.

Alternatively, other expansion agents may be used in liquid or gaseous form, in which case, no water will be added to the formulation. As a non-exhaustive example of various expansion agents other than water, isopentane, cyclopentane or hydrogenated chlorofluorocarbon may be used.

Optionally, the illustrated embodiment flowchart system comprises a T11 dye storage tank. The T11 dye tank comprises at least one type of dye. The dye in the T11 dye storage tank adds color to the formulated mixture and consequently to the final mixture and the final product. The dyes used in the present disclosure are vegetable dyes or water-based dyes.

Optionally, the illustrated embodiment flowchart system also comprises a T12 flame retardant and smoke suppressant storage tank. This optional component is necessary for specific cases of the application and use of biodegradable products, whereby if fire breaks out at a place where the biodegradable product is also present already in its solid state, as either a flame suppressant and retardant, and also a smoke suppressant, which is sometimes more lethal than the fire itself.

In this way, the T06, T07, T08, T09, T10, T11, and T12 storage tanks in Phase 2 are the T06, T07, T08, T09, storage tanks holding organic surfactants, catalysts, and reagents, the T10 water storage tank, the T11 dye and/or flame retardant storage tank, and the T12 smoke suppressant storage tank.

In this embodiment, the T06, T07, T08, T09, T10, T11, and T12 storage tanks are designed to send the formulated mixture components to an MX1 mixer. The formulated mixture components are sent to the MX1 mixer through pipes, such as pipes suitable for the type of material to be transferred. Other forms of transfer may also be used without altering the effect obtained.

The MX1 mixer is a recipient or tank that comprises an internal region, at least one inlet and at least one outlet. The MX1 mixer is basically a recipient designed to mix or stir the components introduced into its interior. Components enter the MX1 mixer through at least one inlet, and leave the MX1 mixer through at least one outlet after the stirring is completed. The MX1 mixer may be considered as a second recipient of the process addressed by the present disclosure.

The MX1 mixer comprises a mechanical stirrer designed to be driven by an MA2 motor. The mechanical stirrer is designed to stir the mixture introduced into the MX1 mixer after switching on the MA2 motor. The MA2 motor, which may be of different types, such as an electric motor, has a frequency variance control for changing the rotation depending on the components introduced into the MX1 mixer. Consequently, when the MA2 motor is switched on, it moves the mechanical stirrer, which in turn stirs the components in the MX1 mixer.

The MX1 mixer is installed on a scale with CCD load cells. The CCD scale allows the components to be dosed as they are introduced into the MX1 mixer.

Consequently, Phase 2 of the process begins with the step of transporting the base mixture from Phase 1 to the MX1 mixer, and a step of weighing the amount of components of the formulated mixture on the CCD scale and introducing them into the MX1 mixer.

Next comes a step of transporting the organic surfactants, the catalysts, and the reagents from the T06, T07, T08, and T09 storage tanks, with water from the T10 storage tank, dye from the T11 tank, if the biodegradable product is to be colored, and the flame retardant and smoke suppressant from the T12 tank, should this option be selected, with a step of weighing the amount of organic surfactants, catalysts, reagents, water, dye, flame retardant and smoke suppressant on the CCD scale of the MX1 mixer.

The amount of water weighed and introduced into the MX1 mixer corresponds to between 3.33% to 8.33% of the quantity of the liquid final mixture. In a practical example, this means that if the amount of the final mixture to be injected or applied is 100 grams, between 3.33 grams and 8.33 grams of water will be used.

The amount of organic surfactants dosed and introduced into the MX1 mixer corresponds to between 0.83% and 2.55% of the liquid final mixture. In a practical example, this means that if the amount of final mixture to be injected or applied is 100 grams, quantities between 0.83 grams and 2.55 grams of organic surfactants will be used.

The amount of catalysts dosed and introduced into the MX1 mixer corresponds to between 0.009% and 0.1333% of the liquid final mixture . In a practical example, this means that if the amount of final mixture to be injected or applied is 100 grams, quantities between 0.009 grams and 0.1333 grams of organic surfactants will be used.

The amount of reagents dosed and introduced into the MX1 mixer corresponds to between 1.066% to 2.45% of the liquid final mixture . In a practical example, this means that if the amount of the final mixture to be injected or applied is 100 grams, quantities between 1,066 grams and 2.45 grams of organic surfactants will be used.

With all the selected components (base mixture and formulated mixture components) introduced into the MX1 mixer in their respective quantities (other than the expansion agent), the step of stirring these components begins, gradually introducing the expansion agent. This step is carried out by the movement of the mechanical stirrer of the MX1 mixer, powered by the MA2 motor. The step of stirring the components introduced into the MX1 mixer has the duration of a second stirring time. The second stirring time is comprised of a time range between 60 minutes and 120 minutes. During this time, the expansion agent is gradually introduced until reaching the desired final quantity. For example, the total amount of water to be added to the formulated mixture is divided by the total stirring time of the second stirring time.

At the end of the steps of introducing and weighing the base mixture in the MX1 mixer, introducing and weighing the formulated mixture components in the MX1 mixer and stirring the components introduced into the MX1 mixer for the second stirring time period with the gradual introduction of the expansion agent, the formulated mixture is obtained.

After the formulated mixture is obtained, the step of removing the formulated mixture from the MX1 mixer is performed. The formulated mixture is removed from the MX1 mixer through a mixture removal pipe using a B3 pump. The B3 pump is an item of equipment in the system diagram of this embodiment designed to remove the formulated mixture from the MX1 mixer and is not limited to any specific type of pump.

In this embodiment, the formulated mixture removed from the MX1 mixer moves on to Phase 3. In Phase 3, the step of storing the formulated mixture in the T13 formulated mixture storage tank occurs.

In addition to the T13 formulated mixture storage tank, Figure 1 shows a T14 methylene diphenyl di-isocyanate, MDI storage tank. MDI is a polymeric, organic, methylene diphenyl di-isocyanate. For example, the MDI may be transferred to the T14 storage tank from a CT2 tanker truck by a B-4 pump.

Thus, the Phase 3 T13, T14 storage tanks are: the T13 formulated mixture storage tank and the T14 MDI storage tank.

The MDI is a polymeric, organic, methylene diphenyl di-isocyanate that comprises an NCO nitrogen-carbon-oxygen varying between 10% and 35%. The effect of MDI on the product is a reagent effect. The MDI is a reactive component that, when mixed with the formulated mixture, produces an exothermic reaction, massively increasing the volume of the final mixture, which will fill a mold and polymerize into a solid foam, which is the solid final product. Although MDI is mentioned, other isocyanates may be used.

As an alternative to the use of MDI as a reagent, and provided that they do not alter the characteristic properties of the final product, such as toxicity and biodegradability, various types of isocyanates may be used as reagents, aliphatic isocyanate, modified isocyanate, blocked isocyanate, and toluene di-isocyanate (TDI) as examples. It is also possible to use a mixture of different isocyanates as a reagent in a manner similar to those listed above. When the formulated mixture is expanded with aliphatic isocyanate, there is no oxidation, so there is no color change, even when exposed to the sun or weathering.

In this embodiment, the T13 and T14 storage tanks are designed to send the formulated mixture and MDI to an applicator (equipment not illustrated). Sending the formulated mixture and the MDI to the application equipment, more specifically, to the work tanks of the application equipment, is carried out through pipes, such as pipes suitable for the type of material to be transferred. Other forms of transfer may also be used without altering the effect obtained.

In this embodiment, the application equipment comprises two work tanks, with at least one inlet and one outlet. The application equipment is basically a recipient designed to handle mixing the MDI with the formulated mixture at a defined temperature. In this embodiment, the application equipment is also the equipment used to apply the formulated mixture and the MDI to the mold or the desired application site. Examples of application equipment used in this embodiment include carousel-type application equipment, and low and high pressure injectors. The application equipment may be considered as a third recipient of in the process described herein. When the purpose is the fabrication of packaging, the third recipient may be, for example, an injector that massively heats the mixture and injects the final mixture into molds with specific shapes, where polymerization occurs; when the purpose is thermal insulation, the third recipient may be, for example, the space between walls; and when the purpose is civil construction, the third recipient may be, for example, large molds without specific formats, whereby the solid product may be cut into specific application parts.

The quantity of formulated mixture introduced into one of the work tanks may be equivalent to between 33.33% and 55.55% of the quantity of the liquid final mixture, and the amount of MDI introduced into the other work tank may be equivalent to between 44.44% and 66.66% of the liquid final mixture.

With the formulated mixture and the MDI duly stored in the work tanks in their respective quantities, the injector that will produce the final mixture will be filled. The injector automatically performs a step of dosing the amount of formulated mixture and MDI, removing the exact amount for the mixture from the work tanks. With the dosing step complete, the injector moves on to the heating and third stirring steps that will produce the final mixture. The third stirring time comprises a time range between 7 seconds and 10 seconds, depending on the ambient temperature. For temperatures above 22°C, the mixing time will be 7 seconds; for room temperatures below 21°C, the mixing time will be 10 seconds. The lower the external ambient temperature, the longer the stirring time of the final mixture.

The step of heating the final mixture takes place during the stirring process. This is composed of the MDI with the formulated mixture in the work tanks at an injection temperature. The injection temperature is a temperature between 30°C and 50°C.

This results in the liquid final mixture, which may be applied to produce biodegradable solid products, which are semi-rigid foam or rigid foam.

After massively heating and stirring the final mixture, composed of the MDI and the formulated mixture at the application temperature, a step is performed of applying the liquid final mixture to generate the final product, which is obtained in a solid state. This step may also be understood as a step of generating the solid final product by shaping the final mixture through exothermic reaction and polymerization.

Shaping the liquid final mixture to generate the solid final product may be carried out, for example, by injection under low or high pressure in molds for the fabrication of packaging or similar items, between the walls of buildings as thermal insulation, and in molds specifically designed for use in civil construction.

In the application phase, depending on the type of application, the optional step is performed of waiting for a solidification time after the application of the final mixture. The solidification time is from 5 minutes to 20 minutes. As the polymerization of the liquid state to the solid state, solidification must respect this time variation for handling, depending on the complexity of the part to be produced, as parts with very slim profiles may break if polymerization is not complete when handled. After the solidification time, the final product will be polymerized, becoming solid.

In brief, the main steps or phases of the process of obtaining the biodegradable product described herein comprise: generating a base mixture, wherein generating the base mixture comprises stirring at least one vegetable oil, and/or blond glycerin, and/or animal fat with nitrilotriethanol or its described substitutes; generating a formulated mixture, wherein generating the formulated mixture comprises stirring the base mixture with organic surfactants, catalysts, reagents and water; generating a final mixture, wherein generating the final mixture comprises stirring the formulated mixture with methylene diphenyl di-isocyanate MDI or its described substitutes; and generating a solid final product by means of dosing, massive mixture heating and injection, obtaining the shape of the final mixture through the polymerization process.

The liquid components mixed into the final mixture are applied and shaped to generate the solid final product. In other words, the final product comprises a solid state that is obtained from the liquid final mixture comprised of the components described above.

The physical and chemical composition of the biodegradable solid final product is defined by the exothermic reaction, as a consequence of the final mixture corresponding to the selected proportion of the formulated mixture, depending on the desired characteristic and MDI, with subsequent polymerization.

The final product comprises a density between 10 kg/m³ and 900 kg/m³, with the possibility of obtaining the final product in several distinct ranges of densities and formulations.

Different examples of embodiments of this invention are presented below. In a non-exhaustive manner, the examples show the nuances of formulas able to attain the desired hydroxyl value for this invention with the aforementioned oils:

### Examples of formulations with different types of oils by weight, for making these rigid and semi-rigid biodegradable products.

### Castor oil

| | Raw material | Rigid | Semi-rigid |
|---|---|---|---|
| Base mixture | oil | 1000 g | 1000 g |
| | nitrilotriethanol | 112 g | 112 g |
| Formulated mixture | diazabicyclo-octane | 2 g | 2 g |
| | nitrilotriethanol | 20 g | 25 g |
| | Diethylene glycol | 25 g | 30 g* |
| | dibutyl dilaurate | 1 g | 0.7 g |
| | Silicone | 60 g | 65 g |
| | Water | 200 g | 300 |

| | | | |
|---|---|---|---|
| *monoethylene glycol | | | |

### Soybean oil

| | Raw material | Rigid | Semi-rigid |
|---|---|---|---|
| Base mixture | oil | 1000 g | 1000 g |
| | nitrilotriethanol | 450 g | 450 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

### Sunflower Oil

| | Raw material | Rigid | Semi-rigid |
|---|---|---|---|
| Base mixture | oil | 1000 g | 1000 g |
| | nitrilotriethanol | 500 g | 500 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

### Corn Oil

| | Raw material | Rigid | Semi-rigid |
|---|---|---|---|
| Base mixture | oil | 1000 g | 1000 g |
| | nitrilotriethanol | 380 g | 380 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

### Canola Oil

| | Raw material | Rigid | Semi-rigid |
|---|---|---|---|
| Base mixture | oil | 1000 g | 1000 g |
| | nitrilotriethanol | 400 g | 400 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

### Cotton Oil

| | Raw material | Rigid | Semi-rigid |
|---|---|---|---|
| Base mixture | oil | 1000 g | 1000 g |
| | nitrilotriethanol | 570 g | 570 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

### Palm Oil

| | Raw material | Rigid | Semi-rigid |
|---|---|---|---|
| Base mixture | oil | 1000 g | 1000 g |
| | nitrilotriethanol | 600 g | 600 g |
| Formulated mixture | diazabicyclo-octane | 2 g | 0.01 g |
| | nitrilotriethanol | 20 g | 30 g |
| | Diethylene glycol | 25 g | 20 g |
| | dibutyl dilaurate | 1 g | 1 g |
| | Silicone | 60 g | 30 g |
| | Water | 200 g | 120 g |

The example shown in Figure 1 may be used to identify the product addressed by the invention, using various oils.

Having analyzed the curve results for the infrared spectroscopy assay of the liquid biodegradable product for samples using different oils (soybean, castor, canola, sunflower, corn, palm and cotton) the versatility of the formulation is initially noted, meaning that it is possible to use any vegetable oil to obtain the formulated mixture. In chemical terms, the obtained spectra lead to the conclusion that the tested samples are polyester polyol, with "a" bands corresponding to the hydroxyl group (-OH) and "c" bands, which are carbonyls (C=O). Together, these two characteristics indicate that the sample is different from a polyester polyol of petrochemical origin, thus confirming that the formulation is fully plant-based.

In Figure 2, the spectroscopy assay example, the biodegradable liquid product, exemplified by the formulated mixture reacts with the isocyanate to form the biodegradable solid product. The biodegradable solid product obtained from the various formulated oils (soybean, castor, canola, sunflower, corn, palm and cotton), was run through a Fourier transform infrared spectroscopy (FTIR) assay, leading to the following conclusions: reduction of the letter "c" -OH band, indicating the consumption of part of the water in the formula used as an expansion agent. Formation of the characteristic letter "b" of the urethane group band, which is the main indicator that the sample is a polyurethane foam.

Observing the graphs together leads to the conclusion that it was possible to form a vegetable polyurethane foam from the biodegradable liquid product without adding products derived from petroleum.

In order to obtain each mentioned density and mechanical strength (semi-rigid or rigid), the quantities of components used are altered.

The biodegradable final product comprises the characteristic of physically decomposing in certain situations. This is because the decomposition of the product during its use may not be desired. For example, the decomposition of a final product applied inside a wall for acoustic and thermal insulation is not desirable. Thus, the biodegradable product decomposes only under a decomposition condition. The decomposition condition occurs when the biodegradable product is exposed to microorganisms and fat-degrading biological agents, which are found in the ground and in garbage dumps.

Consequently, the biodegradable product is endowed with a great advantage over other products at the state of the art, as it decomposes rapidly when discarded in the environment in the decomposition condition. In the decomposition condition, the biodegradable product begins to break down within up to 15 (fifteen) days.

The biodegradable solid product was submitted to degradation tests in anaerobic and aerobic environments, as well as a fish toxicity test. In the anaerobic biodigestion assay, the biodegradable solid product was placed in a reactor, together with nutrients and inoculum (bacterial colony), and the release of biogas was continuously monitored. The result was a rising biogas release curve (mainly methane and CO2), indicating the non-toxicity of the foam in this environment.

To evaluate aerobic degradation, microalgae were used in a controlled medium, with this algae vulnerable to toxic agents, thus serving as an indicator for the toxicity of the biodegradable solid product. The outcome was positive for non-toxicity, as algae exposed to an environment with the biodegradable solid product had the same life cycle as the control samples.

As a supplement to this study, the biodegradable solid product was used as a fish food supplement for 84 days. Once again, the non-toxicity of the biodegradable solid product was noted, because there were no fish deaths and no detection of pathologies during the test group inspection.

Regarding the findings of the degradation study, superior degradation of the biodegradable solid product was observed in an aerobic environment, where it was already quite degraded after 35 days.

Thus, the biodegradable product presents excellent degradability when compared to EPS and fossil PU, as well as with other state of the art products and compared to expectations for biodegradable products.

Furthermore, it should be noted that for all values and all ranges of values of any characteristic defined above there may be a variation of up to 5% more or less. This means that any of the values or ranges may vary within any range up to 5%, for example, 1%, 2%, 3%, 4%, 5% or any decimal value high or lower than the values or ranges of the defined values. In a variation situation, there will naturally be formulation compensation in order to maintain the total value obtained.

## Claims

1. A fabrication process for forming a liquid base product for forming a biodegradable product, **characterized by** comprising:
heating a first base mixture component to a temperature between 50°C and 70°C, wherein the first base mixture component is selected from at least one from the group consisting of: vegetable oil, blond glycerin, and animal fat;
adding a second base mixture component to the first base mixture component, wherein the second base mixture component is selected from at least one from the group consisting of: nitrilotriethanol, pentaerythritol, and trimethylol propane;
heating the combination of the first base mixture component and second base mixture component to a temperature between 90°C and 100°C, or to a temperature above the melting point of the second base mixture component if the second base mixture component has a melting point above 100°C; and
stirring the first base mixture component and second base mixture component for a period ranging between 60 minutes and 120 minutes at the temperature of the previous step to obtain a liquid base product with a hydroxyl value between 200 and 300,
wherein the liquid base product comprises between 63% and 90% of the first base mixture component, and between 10% and 37% of the second base mixture component, considering the total weight of the liquid base product.

2. A fabrication process for forming a liquid formulated product for forming a biodegradable product, **characterized by** comprising:
forming a liquid base product by the process defined in Claim 1;
stirring the liquid base product with at least one from the group consisting of: organic surfactants, catalysts, and reagents, and
gradually introducing an expansion agent during the stirring period of the liquid base product with organic surfactants, catalysts, and/or reagents,
optionally wherein the stirring time ranges between 60 minutes and 120 minutes.

3. A fabrication process for forming a liquid final product for forming a biodegradable product, **characterized by** comprising:
forming a liquid formulated product by the process defined in Claim 2; and
stirring the liquid formulated product with an isocyanate, wherein the isocyanate is MDI that comprises a nitrogen-carbon-oxygen NCO, varying between 10% and 35%.

4. A fabrication process for forming a solid biodegradable product, **characterized by** comprising:
forming a liquid final product by the process defined in Claim 3; and
shaping of the liquid final product through exothermic reaction, and/or polymerization.

5. A liquid base product for forming a biodegradable product, **characterized by** comprising a first base mixture component mixed with a second base mixture component, wherein
the first base mixture component is selected from at least one from the group consisting of: vegetable oil, blond glycerin, and animal fat; and
the second base mixture component is selected from at least one from the group consisting of: nitrilotriethanol, pentaerythritol, and trimethylol propane,
wherein the liquid base product comprises between 63% and 90% of the first base mixture component, and between 10% and 37% of the second base mixture component, considering the total weight of the liquid base product,
wherein the hydroxyl value of the liquid base product is between 200 and 300.

6. The liquid base product, according to Claim 5, **characterized in that** the second base mixture component is nitrilotriethanol with 70% to 100% purity.

7. The liquid base product, according to Claim 5 or 6, **characterized in that**
a) the hydroxyl value of the first base mixture component is in the range between 0.1 and 163, and/or
b) the liquid base product comprises from 100 g to 600 g of the second base mixture component for every 1000 g of the first base mixture component.

8. A liquid formulated product for forming a biodegradable product, **characterized by** comprising the liquid base product as defined in any one of Claims 5 to 7 mixed with an expansion agent and at least one from the group consisting of: organic surfactants, the catalysts, and reagents.

9. The liquid formulated product according to Claim 8, **characterized in that** the organic surfactant is selected from at least one from the group consisting of: silicone, and water soluble silicone.

10. The liquid formulated product, according to Claims 8 or 9, **characterized in that** the catalyst is selected from at least one from the group consisting of: dibutyltin dilaurate, dibutyl cobalt dilaurate, cobalt octoate, diazabicyclo-octane, and dimethylcyclol hexylamine.

11. The liquid formulated product, according to any one of Claims 8 to 10, **characterized in that** the reagent is selected from at least one from the group consisting of: diethylene glycol, monoethylene glycol, and propylene glycol.

12. A liquid final product for forming a biodegradable product, **characterized by** comprising a liquid formulated product, as defined in any one of Claims 8 to 11, mixed with an isocyanate,
wherein the liquid final product comprises between 33.33% and 55.55% of the liquid formulated product and between 44.44% and 66.66% of isocyanate.

13. The liquid final product, according to Claim 12, **characterized in that** the isocyanate is either
a) MDI comprising a nitrogen-carbon-oxygen NCO, varying between 10% to 35%, or
b) the isocyanate is selected from at least one from the group consisting of: aliphatic isocyanate, modified isocyanate, blocked isocyanate and toluene di-isocyanate TDI**.**

14. A biodegradable solid product, **characterized by** comprising the liquid final product, as defined in Claim 12 or 13, polymerized in a solid state.

## Patentansprüche

1. Herstellungsverfahren zur Bildung eines flüssigen Basisprodukts zur Bildung eines biologisch abbaubaren Produkts, **dadurch gekennzeichnet, dass** es aufweist:
Erhitzen einer ersten Basisgemischkomponente auf eine Temperatur zwischen 50°C und 70°C, wobei die erste Basisgemischkomponente ausgewählt ist aus mindestens einem aus der Gruppe bestehend aus: Pflanzenöl, blondem Glycerin und tierischem Fett;
Zugeben einer zweiten Basisgemischkomponente zu der ersten Basisgemischkomponente, wobei die zweite Basisgemischkomponente ausgewählt ist aus mindestens einem aus der Gruppe, bestehend aus: Nitrilotriethanol, Pentaerythrit und Trimethylolpropan;
Erhitzen der Kombination aus der ersten Basenmischungskomponente und der zweiten Basenmischungskomponente auf eine Temperatur zwischen 90°C und 100°C oder auf eine Temperatur oberhalb des Schmelzpunkts der zweiten Basenmischungskomponente, wenn die zweite Basenmischungskomponente einen Schmelzpunkt oberhalb von 100°C hat; und
Rühren der ersten Basisgemischkomponente und der zweiten Basisgemischkomponente für einen Zeitraum zwischen 60 Minuten und 120 Minuten bei der Temperatur des vorherigen Schritts, um ein flüssiges Basisprodukt mit einer Hydroxylzahl zwischen 200 und 300 zu erhalten,
wobei das flüssige Basisprodukt zwischen 63% und 90% der ersten Basenmischungskomponente und zwischen 10% und 37% der zweiten Basenmischungskomponente aufweist, unter Berücksichtigung des Gesamtgewichts des flüssigen Basisprodukts.

2. Herstellungsverfahren zur Bildung eines flüssigen formulierten Produkts zur Bildung eines biologisch abbaubaren Produkts, **dadurch gekennzeichnet, dass** es aufweist:
Bilden eines flüssigen Basisprodukts nach dem in Anspruch 1 definierten Verfahren;
Rühren des flüssigen Basisprodukts mit mindestens einem aus der Gruppe bestehend aus: organischen Tensiden, Katalysatoren und Reagenzien, und
allmähliches Einbringen eines Expansionsmittels während der Rührdauer des flüssigen Basisprodukts mit organischen Tensiden, Katalysatoren und/oder Reagenzien,
wobei die Rührzeit gegebenenfalls zwischen 60 Minuten und 120 Minuten liegt.

3. Herstellungsverfahren zur Bildung eines flüssigen Endproduktes zur Bildung eines biologisch abbaubaren Produktes, **dadurch gekennzeichnet, dass** es aufweist:
Bilden eines flüssigen formulierten Produkts durch das in Anspruch 2 definierte Verfahren; und
Rühren des flüssigen formulierten Produkts mit einem Isocyanat, wobei das Isocyanat MDI ist, das ein Stickstoff-Kohlenstoff-Sauerstoff-NCO aufweist, das zwischen 10% und 35% variiert.

4. Herstellungsverfahren zur Bildung eines festen, biologisch abbaubaren Produkts, **dadurch gekennzeichnet, dass** es Folgendes aufweist:
Bilden eines flüssigen Endprodukts durch das in Anspruch 3 definierte Verfahren; und
Formung des flüssigen Endprodukts durch exotherme Reaktion und/oder Polymerisation.

5. Flüssiges Basisprodukt zur Bildung eines biologisch abbaubaren Produkts, **dadurch gekennzeichnet, dass** es eine erste Basisgemischkomponente aufweist, die mit einer zweiten Basisgemischkomponente gemischt ist, wobei
die erste Basisgemischkomponente ausgewählt ist aus mindestens einem aus der Gruppe bestehend aus: Pflanzenöl, blondem Glycerin und tierischem Fett; und
die zweite Basisgemischkomponente ausgewählt ist aus mindestens einem aus der Gruppe bestehend aus: Nitrilotriethanol, Pentaerythritol und Trimethylolpropan,
wobei das flüssige Basisprodukt zwischen 63 % und 90 % der ersten Basisgemischkomponente und zwischen 10 % und 37 % der zweiten Basisgemischkomponente aufweist, bezogen auf das Gesamtgewicht des flüssigen Basisprodukts,
wobei die Hydroxylzahl des flüssigen Basisprodukts zwischen 200 und 300 liegt.

6. Flüssiges Basisprodukt nach Anspruch 5, **dadurch gekennzeichnet, dass** die zweite Basisgemischkomponente Nitrilotriethanol mit einer Reinheit von 70% bis 100% ist.

7. Flüssiges Basisprodukt nach Anspruch 5 oder 6, **dadurch gekennzeichnet, dass**
a) die Hydroxylzahl der ersten Basenmischungskomponente im Bereich zwischen 0,1 und 163 liegt, und/oder
b) das flüssige Basisprodukt 100 g bis 600 g der zweiten Basenmischungskomponente pro 1000 g der ersten Basenmischungskomponente aufweist.

8. Flüssiges formuliertes Produkt zur Bildung eines biologisch abbaubaren Produkts, **dadurch gekennzeichnet, dass** es das flüssige Basisprodukt, wie in einem der Ansprüche 5 bis 7 definiert, gemischt mit einem Expansionsmittel und mindestens einem aus der Gruppe bestehend aus: organischen Tensiden, den Katalysatoren und Reagenzien aufweist.

9. Flüssiges formuliertes Produkt nach Anspruch 8, **dadurch gekennzeichnet, dass** das organische Tensid ausgewählt ist aus mindestens einem aus der Gruppe, bestehend aus: Silikon und wasserlöslichem Silikon.

10. Flüssiges formuliertes Produkt nach Anspruch 8 oder 9, **dadurch gekennzeichnet, dass** der Katalysator ausgewählt ist aus mindestens einem aus der Gruppe, bestehend aus: Dibutylzinndilaurat, Dibutylcobaltdilaurat, Cobaltoctoat, Diazabicyclooctan und Dimethylcyclolhexylamin.

11. Flüssiges formuliertes Produkt nach einem der Ansprüche 8 bis 10, **dadurch gekennzeichnet, dass** das Reagens ausgewählt ist aus mindestens einem aus der Gruppe bestehend aus: Diethylenglykol, Monoethylenglykol, Propylen und Glykol.

12. Flüssiges Endprodukt zur Bildung eines biologisch abbaubaren Produkts, **dadurch gekennzeichnet, dass** es ein flüssiges formuliertes Produkt, wie in einem der Ansprüche 8 bis 11 definiert, gemischt mit einem Isocyanat aufweist,
wobei das flüssige Endprodukt zwischen 33,33 % und 55,55 % des flüssigen formulierten Produkts und zwischen 44,44 % und 66,66 % Isocyanat aufweist.

13. Das flüssige Endprodukt nach Anspruch 12, **dadurch gekennzeichnet, dass** das Isocyanat entweder
a) MDI ist, das ein Stickstoff-Kohlenstoff-Sauerstoff-NCO aufweist, das zwischen 10 % und 35 % variiert, oder
b) das Isocyanat ausgewählt ist aus mindestens einem aus der Gruppe bestehend aus: aliphatischem Isocyanat, modifiziertem Isocyanat, blockiertem Isocyanat und Toluoldiisocyanat TDI.

14. Biologisch abbaubares festes Produkt, **dadurch gekennzeichnet, dass** es das flüssige Endprodukt nach Anspruch 12 oder 13 aufweist, das in einem festen Zustand polymerisiert ist.

## Revendications

1. Un processus de fabrication pour former un produit de base liquide pour former un produit biodégradable, **caractérisé en ce qu'**il comprend :
le chauffage d'un premier composant de mélange de base à une température comprise entre 50 °C et 70 °C, dans lequel le premier composant de mélange de base est sélectionné parmi au moins un élément du groupe constitué de : huile végétale, glycérine blonde et graisse animale ;
l'ajout d'un second composant de mélange de base au premier composant de mélange de base, dans lequel le second composant de mélange de base est sélectionné parmi au moins un élément du groupe constitué de : nitrilotriéthanol, pentaérythritol et triméthylol propane ;
le chauffage de la combinaison du premier composant de mélange de base et du second composant de mélange de base à une température comprise entre 90 °C et 100 °C, ou à une température supérieure au point de fusion du second composant de mélange de base si le second composant de mélange de base a un point de fusion supérieur à 100 °C ; et
l'agitation du premier composant de mélange de base et du second composant de mélange de base pendant une période allant de 60 minutes à 120 minutes à la température de l'étape précédente pour obtenir un produit de base liquide ayant un indice d'hydroxyle compris entre 200 et 300,
dans lequel le produit de base liquide comprend entre 63 % et 90 % du premier composant de mélange de base, et entre 10 % et 37 % du second composant de mélange de base, en considérant le poids total du produit de base liquide.

2. Un processus de fabrication pour former un produit liquide formulé pour former un produit biodégradable, **caractérisé en ce qu'**il comprend :
la formation d'un produit de base liquide par le processus défini dans la revendication 1 ;
l'agitation du produit de base liquide avec au moins un élément du groupe constitué de: tensioactifs organiques, catalyseurs et réactifs, et
l'introduction progressive d'un agent d'expansion pendant la période d'agitation du produit de base liquide avec les tensioactifs organiques, les catalyseurs et/ou les réactifs,
de manière optionnelle, dans lequel le temps d'agitation est compris entre 60 minutes et 120 minutes.

3. Un processus de fabrication pour former un produit final liquide destiné à former un produit biodégradable, **caractérisé en ce qu'**il comprend :
la formation d'un produit formulé liquide par le processus défini dans la revendication 2 ; et
l'agitation du produit formulé liquide avec un isocyanate, dans lequel l'isocyanate est du MDI qui comprend un groupement azote-carbone-oxygène NCO, variant entre 10 % et 35 %.

4. Un processus de fabrication pour former un produit solide biodégradable, **caractérisé en ce qu'**il comprend :
la formation d'un produit final liquide par le processus défini dans la revendication 3 ; et
la mise en forme du produit final liquide par réaction exothermique et/ou polymérisation.

5. Un produit de base liquide pour former un produit biodégradable, **caractérisé en ce qu'**il comprend un premier composant de mélange de base mélangé avec un second composant de mélange de base, dans lequel
le premier composant de mélange de base est sélectionné parmi au moins un élément du groupe constitué de : huile végétale, glycérine blonde et graisse animale ; et
le second composant de mélange de base est sélectionné parmi au moins un élément du groupe constitué de : nitrilotriéthanol, pentaérythritol et triméthylol propane,
dans lequel le produit de base liquide comprend entre 63 % et 90 % du premier composant de mélange de base, et entre 10 % et 37 % du second composant de mélange de base, en considérant le poids total du produit de base liquide,
dans lequel l'indice d'hydroxyle du produit de base liquide est compris entre 200 et 300.

6. Le produit de base liquide selon la revendication 5, **caractérisé en ce que** le second composant de mélange de base est du nitrilotriéthanol avec une pureté de 70 % à 100 %.

7. Le produit de base liquide selon la revendication 5 ou 6, **caractérisé en ce que**
a) l'indice d'hydroxyle du premier composant de mélange de base est dans la plage comprise entre 0,1 et 163, et/ou
b) le produit de base liquide comprend de 100 g à 600 g du second composant de mélange de base pour chaque 1 000 g du premier composant de mélange de base.

8. Un produit formulé liquide pour former un produit biodégradable, **caractérisé en ce qu'**il comprend le produit de base liquide tel que défini dans l'une quelconque des revendications 5 à 7, mélangé avec un agent d'expansion et au moins un élément du groupe constitué de : tensioactifs organiques, catalyseurs et réactifs.

9. Le produit formulé liquide selon la revendication 8, **caractérisé en ce que** le tensioactif organique est sélectionné parmi au moins un élément du groupe constitué de : silicone et silicone soluble dans l'eau.

10. Le produit formulé liquide selon les revendications 8 ou 9, **caractérisé en ce que** le catalyseur est sélectionné parmi au moins un élément du groupe constitué de : dilaurate de dibutylétain, dilaurate de cobalt dibutyle, octoate de cobalt, diazabicyclo-octane et diméthylcyclohexylamine.

11. Le produit formulé liquide selon l'une quelconque des revendications 8 à 10, **caractérisé en ce que** le réactif est sélectionné parmi au moins un élément du groupe constitué de : diéthylène glycol, monoéthylène glycol et propylène glycol.

12. Un produit final liquide pour former un produit biodégradable, **caractérisé en ce qu'**il comprend un produit formulé liquide, tel que défini dans l'une quelconque des revendications 8 à 11, mélangé avec un isocyanate,
dans lequel le produit final liquide comprend entre 33,33 % et 55,55 % du produit formulé liquide et entre 44,44 % et 66,66 % d'isocyanate.

13. Le produit final liquide selon la revendication 12, **caractérisé en ce que** l'isocyanate est soit
a) du MDI comprenant un groupement azote-carbone-oxygène NCO, variant entre 10 % et 35 %, ou
b) l'isocyanate est sélectionné parmi au moins un élément du groupe constitué de : isocyanate aliphatique, isocyanate modifié, isocyanate bloqué et toluène di-isocyanate TDI.

14. Un produit solide biodégradable, **caractérisé en ce qu'**il comprend le produit final liquide, tel que défini dans la revendication 12 ou 13, polymérisé à l'état solide.
